(19) **Europäisches Patentamt European Patent Office Office européen des brevets**

(11) **EP 1 721 246 B1**

(12) **FASCICULE DE BREVET EUROPEEN**

(45) Date de publication et mention de la délivrance du brevet:
**31.12.2008 Bulletin 2009/01**

(21) Numéro de dépôt: **05730807.4**

(22) Date de dépôt: **24.02.2005**

(51) Int Cl.:
**G06F 7/52** $^{(2006.01)}$

(86) Numéro de dépôt international:
**PCT/FR2005/000443**

(87) Numéro de publication internationale:
**WO 2005/096135 (13.10.2005 Gazette 2005/41)**

(54) **PROCEDE ET DISPOSITIF POUR ACCOMPLIR UNE OPERATION CRYPTOGRAPHIQUE**

VERFAHREN UND EINRICHTUNG ZUR DURCHFÜHRUNG EINER KRYPTOGRAPHISCHEN OPERATION

METHOD AND DEVICE FOR PERFORMING A CRYPTOGRAPHIC OPERATION

(84) Etats contractants désignés:
**AT BE BG CH CY CZ DE DK EE ES FI FR GB GR HU IE IS IT LI LT LU MC NL PL PT RO SE SI SK TR**

(30) Priorité: **02.03.2004 FR 0402146**

(43) Date de publication de la demande:
**15.11.2006 Bulletin 2006/46**

(73) Titulaire: **FRANCE TELECOM**
**75015 Paris (FR)**

(72) Inventeurs:
- **GIRAULT, Marc**
  **F-14000 Caen (FR)**
- **LEFRANC, David**
  **F-14000 Caen (FR)**

(74) Mandataire: **Fréchède, Michel et al**
**Cabinet Plasseraud**
**52 rue de la Victoire**
**75440 Paris Cedex 09 (FR)**

(56) Documents cités:
**US-A- 4 995 082       US-A1- 2003 093 671**
**US-A1- 2003 159 038**

## Description

La présente invention concerne un procédé pour accomplir une opération cryptographique dans un dispositif dans le cadre d'une application de sécurité. En particulier, l'invention se rapporte aux procédés cryptographiques de protection contre la fraude d'une puce électronique dans des transactions entre une application externe et la puce.

L'invention trouve une application très avantageuse en ce qu'elle permet de protéger contre la fraude des puces à circuit intégré à logique câblée, notamment les puces qui équipent les cartes prépayées utilisées dans des transactions diverses telles que l'établissement de communications téléphoniques, le paiement d'objets dans un distributeur automatique, la location d'emplacements de stationnement à partir d'un parcmètre, le paiement d'un service comme un transport public ou comme la mise à disposition d'infrastructures (péage, musée, bibliothèque,...), ou les puces qui équipent les étiquettes radiofréquences ("RFID tags") utilisées dans le traçage de palettes, de produits de grande consommation, de billets de banque, etc...

Actuellement, les puces à logique câblée sont susceptibles de subir différents types de fraude. Un premier type de fraude consiste à dupliquer sans autorisation la carte, le terme clonage étant souvent utilisé pour caractériser cette opération. Un deuxième type de fraude consiste à modifier les données attachées à une carte, en particulier le montant du crédit inscrit dans la carte. Pour lutter contre ces fraudes, il est fait appel à la cryptographie, d'une part pour assurer l'authentification de la carte au moyen d'une authentification et/ou pour assurer l'authentification des données au moyen d'une signature numérique et, d'autre part pour assurer le cas échéant la confidentialité des données au moyen d'un chiffrement. La cryptographie met en jeu deux entités, qui sont dans le cas de l'authentification un vérificateur et un objet à vérifier, et elle peut être soit symétrique, soit asymétrique. Lorsqu'elle est symétrique (ou "à clé secrète", les deux termes étant synonymes), les deux entités partagent exactement la même information, en particulier une clé secrète. Lorsqu'elle est asymétrique (ou "à clé publique", les deux termes étant synonymes) une des deux entités possèdent une paire de clés dont l'une est secrète et l'autre est publique ; il n'y a pas de clé secrète partagée. Dans de nombreux systèmes, notamment lorsque la puce est de type "à logique câblée", seule la cryptographie symétrique est mise en oeuvre avec des cartes prépayées, car la cryptographie asymétrique reste lente et coûteuse. Les premiers mécanismes d'authentification développés en cryptographie symétrique consistent à calculer une fois pour toutes une valeur d'authentification, différente pour chaque carte, à la stocker dans la mémoire de la carte, à la lire à chaque transaction et à la vérifier en interrogeant une application du réseau supportant la transaction où les valeurs d'authentification déjà attribuées sont soit stockées soit recalculées. Ces mécanismes assurent une protection insuffisante parce que la valeur d'authentification peut être espionnée, reproduite et rejouée frauduleusement étant donné qu'elle est toujours la même pour une carte donnée, permettant ainsi de réaliser un clone de cette carte. Pour lutter contre les clones, les mécanismes d'authentification passifs de cartes sont remplacés par des mécanismes d'authentification actifs qui peuvent en outre assurer l'intégrité des données.

Le principe général des mécanismes d'authentification actifs symétriques est le suivant : lors d'une authentification, la puce électronique et l'application calculent une valeur d'authentification qui est le résultat d'une fonction appliquée à une liste d'arguments déterminée à chaque authentification. La liste d'arguments peut comprendre un aléa, c'est-à-dire une donnée déterminée par l'application à chaque authentification, une donnée contenue dans la puce électronique et une clé secrète connue de la puce électronique et de l'application. Lorsque la valeur d'authentification calculée par la puce électronique est identique à la valeur d'authentification calculée par l'application, la puce électronique est jugée authentique et la transaction entre la puce électronique et l'application est autorisée.

De tels mécanismes d'authentification sont largement connus mais la plupart exigent des capacités de calcul au moins égales à celles dont dispose un microprocesseur. Ces mécanismes conviennent donc aux cartes à microprocesseur, mais rarement aux puces à logique câblée, lesquelles disposent de moyens de calcul beaucoup plus rudimentaires.

Un premier pas a été effectué lorsque des mécanismes actifs d'authentification symétriques ont pu être intégrés dans des puces à logique câblée. Par exemple, FR-A-2 826 531 décrit un procédé permettant de spécifier de tels mécanismes. On notera que la valeur d'authentification produite par ces mécanismes peut aussi être interprétée comme une séquence de bits pseudo-aléatoires et, en faisant varier au moins l'un des paramètres d'entrée, le procédé de calcul de la valeur d'authentification devient alors un procédé de génération de bits pseudo-aléatoires.

Cependant, les mécanismes à clé secrète imposent que l'unité de vérification, en charge de l'authentification de la puce, par exemple présente dans un téléphone public, un terminal de paiement électronique, ou encore un portillon de transport en commun, connaisse la clé secrète détenue par ladite puce. Il en découle un inconvénient majeur, à savoir que si l'on souhaite que cette unité puisse authentifier n'importe quelle puce mise en relation avec l'application, soit elle doit stocker les clés secrètes de toutes les puces, soit elle doit stocker une clé de base, appelée aussi clé-mère ou clé-maître, permettant de retrouver la clé secrète de n'importe quelle puce. Dans les deux cas, chacune de ces unités stocke suffisamment d'information pour pouvoir retrouver les clés secrètes de toutes les puces émises, et stocke donc suffisamment d'information pour pouvoir fabriquer des clones de n'importe laquelle d'entre elles. Il s'ensuit qu'une intrusion réussie contre n'importe laquelle des unités de vérification anéantirait la sécurité de l'application dans son ensemble.

Il existe donc un besoin impérieux de pouvoir intégrer un mécanisme actif d'authentification à clé publique dans une puce à logique câblée, notamment dans les applications déployant un grand nombre de puces, ce qui est généralement le cas des applications utilisant des puces à logique câblées, car elles sont très bon marché.

Il n'existe pas de tels mécanismes car les schémas à clés publiques requièrent généralement de nombreuses opérations portant sur de grands nombres, ce qui les rend a priori inadaptés à une intégration dans des puces à logique câblée, dans lesquelles la surface de silicium est extrêmement réduite, et dont la logique de calcul se réduit au câblage d'opérations extrêmement élémentaires. De surcroît, ces opérations élémentaires sont effectuées généralement en série, en ce sens que les opérandes sont introduits séquentiellement bit à bit, et que cette introduction modifie progressivement l'état d'un registre interne dont la valeur finale sert de base au calcul du résultat de la fonction.

Par exemple, il est connu de calculer une valeur d'authentification y en effectuant l'opération y = r + s.c (ou y = r - s.c), où r designe un aléa, s une clé secrète appartenant à une paire de clés asymétrique (s, p), et c est une valeur dite "challenge" choisie par l'application, qui ne peut pas dépasser un certain seuil, la valeur de r devant toujours rester supérieure au nombre qui lui est ajouté (ou soustrait). Ceci implique l'exécution d'au moins une multiplication entre entiers a priori quelconques s, c. Or une telle multiplication est une opération relativement complexe, hors de portée de la plupart des puces à logique câblée.

Un but de la présente invention est de définir un procédé de calcul d'une valeur cryptographique, par exemple d'authentification, qui soit tel que la puce n'ait pas à effectuer explicitement une opération de multiplication et que le niveau de sécurité obtenu soit relativement important, par exemple de l'ordre de 32 bits, ce qui est un niveau de sécurité extrêmement répandu, notamment dans la protection de transactions financières.

L'invention propose un procédé pour accomplir une opération cryptographique dans un dispositif sous le contrôle d'une application de sécurité, dans lequel on produit une valeur cryptographique dans le dispositif, par un calcul comprenant au moins une multiplication entre deux facteurs incluant une partie au moins d'une clé secrète associée au dispositif. Selon l'invention, un premier des deux facteurs de la multiplication a un nombre de bits déterminé L en représentation binaire, et on contraint le second des deux facteurs de la multiplication pour qu'il comprenne, en représentation binaire, plusieurs bits à 1 avec, entre chaque paire de bits à 1 consécutifs, une séquence d'au moins L-1 bits à 0. La multiplication n'a alors pas besoin d'être exécutée selon un algorithme complexe. Il suffit de la réaliser en assemblant des versions binaires du premier facteur respectivement décalées conformément aux positions des bits à 1 du second facteur.

Selon d'autres caractéristiques intéressantes du procédé de l'invention:

- la clé secrète fait partie d'une paire de clés cryptographiques asymétriques associée au dispositif;
- le dispositif comprend une puce incluant une logique câblée pour produire la valeur cryptographique;
- le calcul de la valeur cryptographique comprend en outre une addition ou une soustraction entre un nombre pseudo-aléatoire et le résultat de la multiplication;
- les premier et second facteurs et le nombre pseudo-aléatoire sont dimensionnés pour que le nombre pseudo-aléatoire soit supérieur au résultat de la multiplication, le nombre de bits à 1 du second facteur pouvant notamment être choisi au plus égal au plus grand entier inférieur ou égal à $s_1/L$, où $s_1$ est un seuil prédéfini inférieur au nombre de bits du nombre pseudo-aléatoire en représentation binaire;
- les deux facteurs de la multiplication incluent, en plus de ladite partie de la clé secrète, un nombre fourni au dispositif par l'application de sécurité, laquelle est exécutée en dehors du dispositif;
- ladite partie de la clé secrète est soit le premier soit le second facteur de la multiplication;
- lorsque ladite partie de la clé secrète est le premier facteur de la multiplication, lesdites versions binaires sont par exemple disposées dans des intervalles respectifs de même taille en bits, ladite taille correspondant à la taille totale d'un espace utilisable divisée par le nombre de bits à 1 du second facteur de la multiplication, chaque version binaire étant placée dans son intervalle respectif en fonction d'un décalage défini par l'application de sécurité;
- lorsque la clé secrète est le second facteur de la multiplication, elle peut être stockée dans un support de mémoire du dispositif en codant des nombres de bits séparant respectivement des bornes inférieures d'intervalles de (S-1) /(n-1) bits et des bornes inférieures de blocs de bits alloués au premier facteur de la multiplication et disposés chacun dans les intervalles associés, S étant le nombre de bits de la clé secrète et n le nombre de bits à 1 de la clé secrète;
- en variante, on peut stocker cette clé secrète dans le support de mémoire du dispositif en codant des nombres de bits, chacun représentatif du nombre de bits séparant deux blocs de bits successifs alloués au premier facteur de la multiplication;
- lorsque ladite partie de la clé secrète est le second facteur de la multiplication, elle est stockée dans un support de mémoire du dispositif en codant les positions de ses bits à 1;
- lorsque ladite partie de la clé secrète est le second facteur de la multiplication, le premier facteur peut être un nombre pseudo-aléatoire généré dans le dispositif, la valeur cryptographique étant produite en tant que signature électronique;

- dans une autre application, la valeur cryptographique est produite pour authentifier le dispositif dans une transaction avec l'application de sécurité exécutée en dehors du dispositif.

L'invention propose également un dispositif à fonction cryptographique, comprenant des moyens d'interface avec une application de sécurité et des moyens de calcul pour produire une valeur cryptographique, les moyens de calcul comprenant des moyens de multiplication entre deux facteurs incluant une partie au moins d'une clé secrète associée au dispositif. Selon l'invention, un premier des deux facteurs de la multiplication a un nombre de bits déterminé L en représentation binaire, et le second des deux facteurs de la multiplication est contraint pour comprendre, en représentation binaire, plusieurs bits à 1 avec, entre chaque paire de bits à 1 consécutifs, une séquence d'au moins L-1 bits à 0. Les moyens de multiplication comprennent des moyens pour assembler des versions binaires du premier facteur respectivement décalées conformément aux positions des bits à 1 du second facteur.

Un avantage de la présente invention est d'obtenir un bon niveau de sécurité des dispositifs utilisant la cryptographie pour se protéger contre la fraude, particulièrement lors des transactions entre une puce électronique à logique câblée et une application de sécurité externe à la puce électronique.

Un autre avantage de l'invention est sa simplicité de mise en oeuvre puisqu'elle ne nécessite pas de moyens de multiplication, coûteux et difficiles à mettre en oeuvre dans une puce électronique du fait de sa taille réduite, les moyens de multiplication étant remplacés par des moyens d'addition pour sommer les décalés de la clé secrète ou du challenge. En effet, la multiplication d'un entier par une puissance de deux revient à décaler vers la gauche les bits de la décomposition binaire.

D'autres particularités et avantages de la présente invention apparaîtront dans la description ci-après d'exemples de réalisation non limitatifs, en référence aux dessins annexés, dans lesquels :

- la figure 1 illustre un organigramme décrivant un mode de réalisation d'une authentification cryptographique ;

- la figure 2 illustre un mode de réalisation du procédé de l'invention;

- la figure 3 illustre une première variante de réalisation du procédé de l'invention ;

- la figure 4 illustre une seconde variante de réalisation du procédé de l'invention;

- la figure 5 illustre une première variante de stockage d'une clé secrète selon l'invention ;

- la figure 6 illustre une seconde variante de stockage d'une clé secrète selon l'invention ;

- la figure 7 illustre un exemple de dispositif à fonction cryptographique mettant en oeuvre le premier mode de réalisation de l'invention; et

- la figure 8 illustre un exemple d'utilisation d'un dispositif à fonction cryptographique selon l'invention.

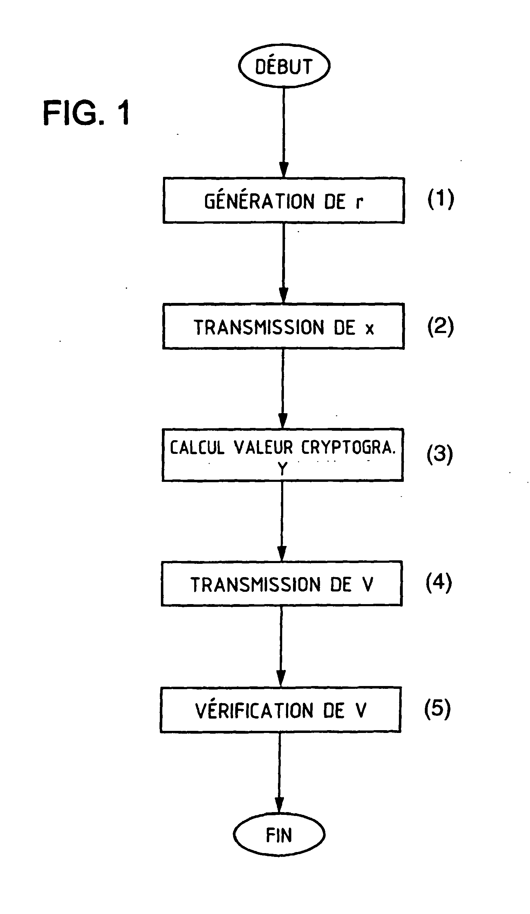

La figure 1 illustre un organigramme d'un procédé pour exécuter une opération cryptographique dans un dispositif, particulièrement une puce électronique à logique câblée, sous le contrôle d'une application de sécurité exécutée en dehors du dispositif.

Notamment, un tel procédé est appliqué dans des transactions entre la puce électronique et l'application. Mais il peut aussi bien être utilisé pour le calcul d'une valeur cryptographique constituant une signature numérique.

Dans une première étape 1, le procédé consiste à générer dans la puce électronique un nombre pseudo-aléatoire r dit aléa au moyen d'un générateur pseudo-aléatoire inclus dans la puce électronique. L'aléa r est propre à une transaction.

Dans une deuxième étape 2, le procédé consiste à transmettre de la puce électronique à l'application de sécurité un paramètre x relié à l'aléa r sur la base d'une fonction f telle que $x = f(r)$, f étant associée à une clé publique connue de la puce électronique et de l'application de sécurité. Des paramètres x peuvent être calculés d'avance et stockés dans une mémoire de la puce, chaque paramètre x étant associé respectivement à un nombre pseudo-aléatoire r.

A titre d'exemple, g étant un nombre connu de l'application de sécurité, la fonction f peut classiquement être de la forme : $x = f(r) = g^r$. Une autre possibilité, également bien connue de l'homme du métier, est d'utiliser dans la fonction f une fonction de hachage cryptographique h ainsi que des données D liées à l'application (par exemple un montant de transaction) : $x = f(r) = h(g^r, D)$. D'autres exemples de fonction f sont également utilisables.

Dans une troisième étape 3, le procédé consiste à calculer dans la puce électronique une valeur cryptographique y, conformément au procédé de l'invention décrit plus loin, par des moyens de multiplication ayant pour paramètres d'entrée au moins l'aléa r propre à la transaction et une clé secrète appartenant à une paire de clés asymétriques (s, p), par exemple avec $p = g^s$. La valeur cryptographique constitue tout ou partie d'une valeur d'authentification V.

Dans une quatrième étape 4, le procédé consiste à transmettre la valeur d'authentification V à l'application.

Dans une cinquième étape 5, le procédé consiste à vérifier par l'application de sécurité la valeur d'authentification V au moyen d'une fonction de vérification dont les paramètres d'entrée se composent de paramètres publics, contenant au moins la clé publique p. Si la valeur d'authentification est validée par l'application de sécurité, les transactions sont autorisées.

La présente invention a pour but de calculer une valeur cryptographique y en effectuant une opération du type $y = r + f_1 * f_2$ (ou de façon équivalente $y = r - f_1 * f_2$) où r désigne un aléa calculé par un générateur pseudo-aléatoire inclus dans la puce électronique et $(f_1, f_2)$ un couple de facteurs incluant la clé secrète s et un nombre c dit challenge fourni par l'application de sécurité. Les représentations binaires des facteurs $f_1$, $f_2$ sont telles que le facteur $f_1$ a une taille en bits notée L et que les bits à 1 successifs du facteur $f_2$ ont toujours entre eux une séquence d'au moins L-1 bits à 0.

Ainsi, la multiplication des facteurs $f_1$, $f_2$ revient à sommer un nombre n de versions binaires b[1], b[2], ..., b[n] du premier facteur $f_1$ respectivement décalées conformément aux positions des bits à 1 du second facteur $f_2$. Le nombre n est dépendant du nombre de bits à 1 du second facteur $f_2$. Compte tenu de ces décalages, la somme $\sum_{h=1}^{n} b[h]$ est réalisée très simplement en assemblant les b[h] dans un nombre binaire représentant le résultat de la multiplication.

Dans la description qui suit, on décrit un premier mode de réalisation du procédé de l'invention où le facteur $f_1$ est la clé secrète s de L bits et le second facteur $f_2$ est le challenge pseudo-aléatoire c fourni par l'application de sécurité. Ainsi la valeur cryptographique y est déterminée en effectuant l'opération :

$$y = r + s*(2^{i[1]} + \ldots + 2^{i[n]})$$

où i[1], ... , i[n] désignent n valeurs entières choisies par l'application avec deux contraintes :

- les valeurs i[1], ..., i[n] doivent toutes rester inférieures ou égales à un seuil noté $s_1$ de sorte que la valeur r reste toujours supérieure au nombre qui lui est ajouté (ou soustrait), ledit seuil définissant alors un espace utilisable sur les bits de r.

- la seconde contrainte consiste à imposer que les différentes valeurs i[1], ... , i[n] soient distantes les unes des autres par au moins la taille en bits de la clé secrète.

Ainsi, la clé secrète s étant composée de L bits, et en supposant les différents entiers i[1], ..., i[n] rangés par ordre croissant, l'application de sécurité fournit ces valeurs i[1], ..., i[n] telles que $i[1]+L \leq i[2]$, $i[2]+L \leq i[3]$, ..., $i[n-1]+L \leq i[n]$ et $i[n]<s_1$.

Ainsi, le nombre n de bits à 1 du second facteur est choisi au plus égal au plus grand entier inférieur ou égal à $s_1/L$.

Les deux contraintes imposent à la valeur de n un maximum noté u, qui ne sera généralement pas très élevé, par exemple u = 5 ou 6. Préférentiellement, la valeur de n sera prise égale au maximum u.

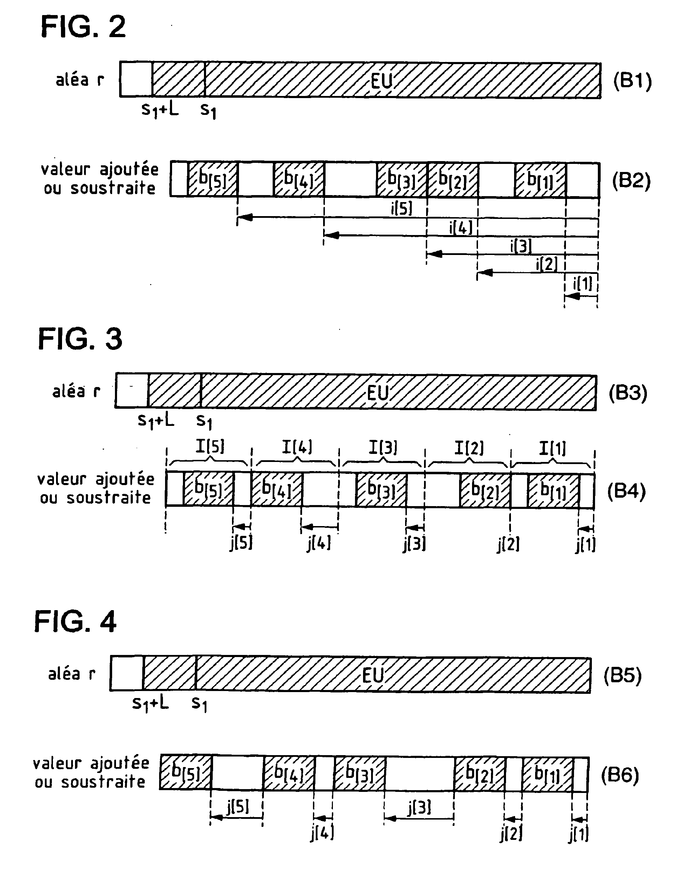

La figure 2 illustre un exemple d'utilisation du procédé de l'invention avec n = 5. Le diagramme B1 représente l'aléa r avec l'espace utilisable EU de taille $L+s_1$ bits. Le diagramme B2 représente le résultat de la multiplication s*c = $s*(2^{i[1]} + ... + 2^{i[n]})$, ajouté (ou soustrait) à r. La clé secrète s est décalée conformément aux positions des bits à 1 du challenge c. On obtient ainsi les versions binaires b1 à b5 respectivement décalées de i[1], i[2], i[3], i[4] et i[5] bits.

Un avantage de la présente invention repose sur le gain de sécurité obtenu avec un tel procédé, car deviner les différentes valeurs des entiers i[h], et éventuellement le nombre n lui-même s'il n'est pas fixé par l'application de sécurité, est très difficile.

Un autre avantage est que le gain de sécurité se fait sans pour autant complexifier significativement le calcul de la valeur cryptographique y puisque la multiplication entre la clé secrète et le challenge revient à assembler des décalés (ou versions binaires) conformément à l'invention, le calcul étant effectué en série.

Selon une première variante du procédé, on impose que les n décalés de la clé secrète soient tous placés dans des intervalles de même taille. Cette taille est souhaitée maximale, ce qui signifie qu'elle est égale à la taille totale de l'espace utilisable EU divisée par n ou, si cette valeur n'est pas un entier, le plus grand entier qui lui soit inférieur. On notera j[1], j[2], ..., j[n] les écarts, choisis par l'application, des blocs de bits correspondant aux décalés de la clé secrète avec la borne inférieure de l'intervalle dans lequel ces blocs associés sont situés.

Plus formellement, soit k la taille totale de l'espace utilisable (égale à $s_1$+L), n est alors le nombre de fois où l'on veut faire apparaître la clé secrète de façon disjointe parmi les k bits utilisables. On suppose que k est divisible par n (dans le cas contraire, on augmente légèrement la valeur de k pour qu'il en soit ainsi).

L'espace total utilisable peut se décomposer en n intervalles de même taille contenant chacun k/n positions de la façon suivante :

$$[0, k/n-1] \cup [k/n, 2k/n-1] \cup \ldots \cup [(n-1)k/n, k-1]$$

Avec l'utilisation de la présente variante, on peut démontrer qu'il y a au total $((k/n)-L+1)^n$ valeurs différentes que l'on peut ajouter à l'aléa r.

En effet, chaque intervalle contient k/n positions dont L utilisées pour écrire le décalé de la clé secrète. Il reste donc k/n-L positions libres dans chaque intervalle à repartir autour du bloc de bits utilisés par le décalé. Ainsi, pour tout h tel que $1 \le h \le n$, j[h] est une valeur comprise entre 0 et (k/n)-L et correspond au nombre de bits entre la (h-1)(k/n)-ième position et la position du premier bit du décalé. Il y a donc (k/n)-L+1 valeurs possibles pour chaque j[h]. Finalement, le nombre de n-uplets (j[1], j[2], ..., j[n]) différents est $((k/n)-L+1)^n$.

En d'autres termes, la valeur cryptographique y est calculée en effectuant l'opération :

$$y = r + \left(2^{j[1]}.s + 2^{k/n+j[2]}.s + 2^{2k/n+j[3]}.s + \ldots + 2^{(n-1)k/n+j[n]}.s\right)$$

où les n valeurs j[1], j[2], ..., j[n] sont choisies par l'application de sécurité de façon telle que $j[h] \in [0, (k/n)-L]$ pour tout h.

Chaque version binaire b[h] est donc décalée de j[h] bits par rapport à la borne inférieure de l'intervalle.

Sur la figure 3, on a noté l[h] = [(h-1)k/n, hk/n-1] le h-ième intervalle dans un cas particulier de la première variante de réalisation où n = 5. Le diagramme B3 représente l'aléa r avec l'espace utilisable EU, tandis que le diagramme B4 représente la valeur ajoutée (ou soustraite). On obtient ainsi des versions binaires b[h] de la clé secrète s, à savoir b[1], b[2], b[3], b[4] et b[5], respectivement disposées dans les intervalles l[h]. Chaque version binaire b[h] est décalée de j[h] bits par rapport à la borne inférieure de l'intervalle l[h] associé.

Selon une seconde variante du procédé de l'invention, les n valeurs d'écarts j[1], j[2], ..., j[n] sont choisies par l'application de sécurité de façon à représenter les écarts entre deux blocs consécutifs correspondant à deux décalés de la clé secrète. Comme dans la première variante, les n valeurs peuvent être prises dans l'intervalle [0, (k/n)-L].

La valeur cryptographique est ainsi calculée en effectuant l'opération :

$$y = r + \left(2^{j[1]}.s + 2^{L+j[1]+j[2]}.s + 2^{2L+j[1]+j[2]+j[3]}.s + \ldots + 2^{(n-1)L+j[1]+j[2]+\ldots+j[n]}.s\right).$$

La figure 4 illustre un exemple d'utilisation de la seconde variante du procédé de l'invention avec n=5. Le diagramme B5 représente l'aléa r avec l'espace utilisable EU, tandis que le diagramme B6 représente la valeur ajoutée (ou soustraite). On obtient ainsi cinq versions binaires b[1], b[2], b[3], b[4] et b[5], de la clé secrète s, décalées entre elles de j[1], j[2], j[3], j[4] et j[5] bits, respectivement.

Dans certains cas, on pourra relâcher quelque peu la contrainte sur le nombre de bits à 0 devant séparer deux bits à 1 consécutifs du challenge c, au prix d'une augmentation modérée de la complexité de la logique câblée de la puce, sans sortir du cadre de la présente invention. Considérons par exemple le cas où la clé secrète s = $f_1$ du dispositif est un nombre de L bits avec n = 6. Si on impose que deux bits à 1 consécutifs du challenge c = $2^{i[1]} + 2^{i[2]} + 2^{i[3]} + 2^{i[4]} + 2^{i[5]} + 2^{i[6]}$ soient toujours séparés par une séquence d'au moins U2 bits à 0 (c'est-à-dire que i[1]+U2 < i[2], ..., i[5]+L < i[6] <$s_1$, il est aisé de décomposer ce challenge en deux termes: c = $f_2$ + $f'_2$, où $f_2$ = $2^{i[1]} + 2^{i[3]} + 2^{i[5]}$ et $f'_2$ = $2^{i[2]} + 2^{i[4]} + 2^{i[6]}$. Chacun de ces deux termes $f_2$, $f'_2$ vérifie la condition requise pour être le second facteur de la multiplication dans le procédé selon l'invention: i[1]+L < i[3] < i[5]-L pour $f_2$ et i[2]+L < i[4] < i[6]-L pour $f_2$. L'opération cryptographique à effectuer s'écrit y = r + s.$f_2$ + s.$f'_2$, chacune des deux multiplications s.$f_2$, s.$f'_2$ pouvant être réalisée par assemblage de versions décalées de s conformément à l'invention. La logique câblée doit alors comporter deux circuits additionneurs (ou soustracteurs).

Dans un autre mode de réalisation de l'invention, les rôles de s et de c dans la multiplication sont inversés: le

premier facteur $f_1$ est le nombre pseudo-aléatoire c, tandis que le second facteur $f_2$ est la clé secrète s. La valeur cryptographique y est donc calculée en effectuant l'opération:

$$y = r + c^*(2^{i[1]} + \ldots + 2^{i[n]})$$

où r désigne un aléa, c le challenge choisi par l'application de sécurité, et les n valeurs i[1], ..., i[n] correspondent aux positions des bits non nuls de la clé secrète s associée au dispositif, ou d'une partie de cette clé secrète. En d'autres termes, la clé secrète s est $2^{i[1]} + 2^{i[2]} + \ldots + 2^{i[n]}$. Les n valeurs i[1], ... , i[n] doivent vérifier les mêmes contraintes que celles présentées lors du premier mode de réalisation.

Le procédé pour le calcul d'une telle valeur cryptographique est identique à celui précédemment présenté dans le premier mode de réalisation.

Toutefois, la clé secrète s = $2^{i[1]} + 2^{i[2]} + \ldots + 2^{i[n]}$ reste identique pour toutes les authentifications, comme l'est une clé secrète classique. Deux cas peuvent se présenter pour l'utilisation de ce second mode de réalisation :

- la clé secrète est dédiée à une application particulière nécessitant un niveau de sécurité $L_0$ constant. Dans ce cas, la construction de la clé secrète s se fait en utilisant une clé secrète s avec des bits non nuls séparés par au moins $(L_0-1)$ bits; ou

- la clé secrète est utilisée dans différentes applications nécessitant des niveaux de sécurité différents. Il faut alors considérer le niveau de sécurité le plus grand. En effet, dans le cas contraire, la construction d'une clé avec des bits non nuls séparés par $(L_0-1)$ bits peut donner lieu à des challenges de taille $L_1 > L_0$, de sorte que les décalés du challenge ne seraient plus disjoints. D'où la nécessité d'avoir des bits non nuls de la clé secrète séparés par au moins L-1 bits, où L représente le niveau maximal de sécurité pouvant être rencontré durant l'utilisation de la clé secrète s.

Pour mémoriser la clé secrète, une première solution consiste à la stocker dans sa totalité. Mais étant donné la taille de la clé secrète due au niveau de sécurité élevé, des contraintes physiques, particulièrement la taille de la mémoire de la puce électronique, limitent la taille de stockage possible, notamment pour des raisons économiques.

Une seconde solution consiste à tirer parti de la structure de la clé secrète du type $2^{i[1]} + 2^{i[2]} + \ldots + 2^{i[n]}$, en ne stockant que les positions des bits non nuls de la clé secrète. Cette seconde solution peut être améliorée, afin de stocker encore moins de bits. Deux méthodes sont possibles.

Soit S la taille de la clé secrète ayant n bits non nuls en faisant l'hypothèse que S-1 soit divisible par n-1. Un premier bit non nul est placé à la position S-1 pour obtenir un secret de la taille souhaitée. Ensuite, on découpe les S-1 autres bits de la clé secrète en n-1 intervalles I[1], I[2], ..., I[n-1] de (S-1)/(n-1) bits.

Dans chacun des intervalles I[h], on place un bloc de bits alloué au bloc de bits représentant le challenge de taille L. Chaque intervalle contient donc (S-1)/(n-1) - L bits non utilisés qui se répartissent à gauche et à droite du bloc de bits alloué. Au maximum, (S-1)(n-1) - L bits peuvent être placés entre la borne inférieure de l'intervalle et le bloc alloué.

Ainsi, au lieu de stocker la position i[h] des bits non nuls, on peut stocker le nombre de bits p[h] se trouvant entre la borne inférieure de chaque intervalle et ledit bloc de bits alloué se trouvant dans l'intervalle considéré.

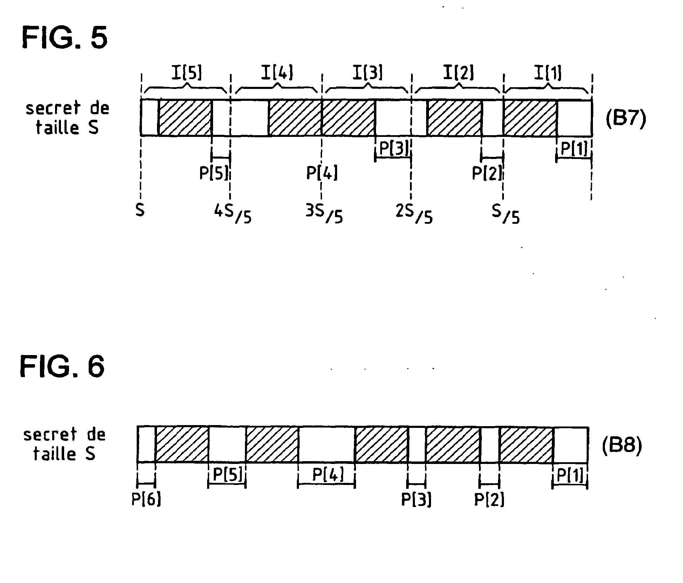

La figure 5 illustre un exemple de stockage d'une clé secrète ayant cinq bits non nuls. On stocke ainsi les nombres de bits p[1], p[2], p[3], p[4] (dans l'exemple nul) et p[5].

La seconde méthode consiste à stocker le nombre de bits se trouvant entre deux blocs consécutifs de bits alloués au bloc relatif au challenge et le nombre de bits se trouvant à chaque extrémité (avant le premier bloc alloué et après le dernier bloc alloué).

La figure 6 illustre la présente méthode dans le cas où la clé secrète contient cinq bits non nuls. Ainsi les valeurs p[1], p[2], p[3], p[4], p[5] et p[6] sont stockées sur un support de mémoire de la puce électronique. Cet exemple n'est pas limitatif et des valeurs p[h] peuvent être nulles.

Dans le second mode de réalisation de l'invention, il est aussi possible dans certains cas de relâcher quelque peu la contrainte sur le nombre de bits à 0 devant séparer deux bits à 1 consécutifs de la clé s, au prix d'une augmentation modérée de la complexité de la logique câblée de la puce, sans sortir du cadre de la présente invention.

Le procédé de l'invention est utilisable pour calculer une valeur cryptographique pour protéger contre la fraude un dispositif, particulièrement une puce électronique à logique câblée, sous le contrôle d'une application de sécurité externe au dispositif, dans les transactions entres ces deux entités.

Un tel procédé est également utilisable pour calculer une valeur cryptographique comme constituant d'une signature numérique. Dans ce cas, le nombre c dit challenge n'est pas fourni par l'application de sécurité mais est calculé par la puce électronique d'après un message à signer.

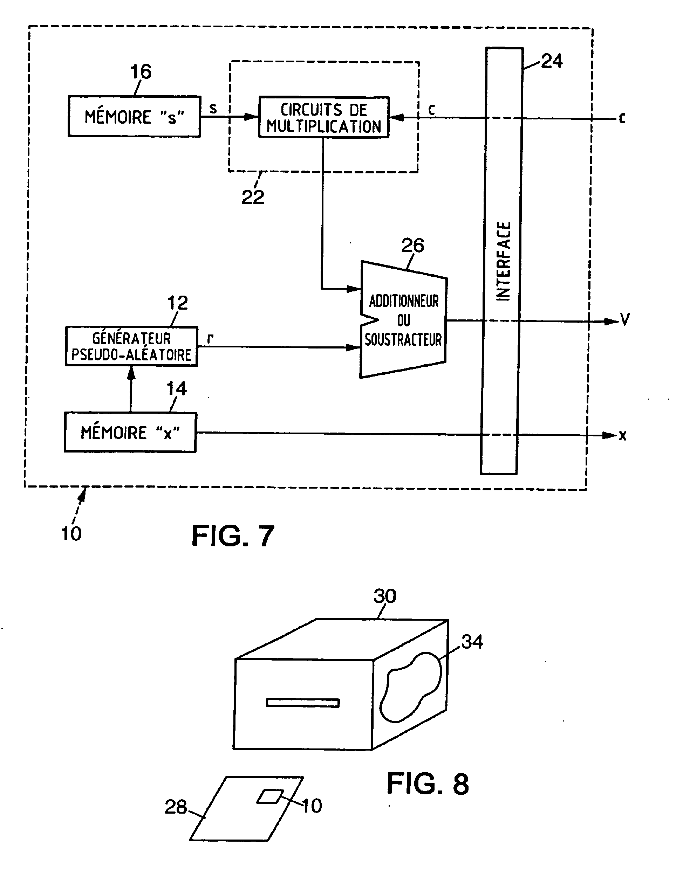

La figure 7 illustre un exemple de dispositif à fonction cryptographique mettant en oeuvre le premier mode de réalisation de l'invention.

Le dispositif 10, tel qu'une puce électronique, comprend :

- un générateur de nombre pseudo-aléatoire 12 produisant un aléa r propre à une transaction, l'aléa r étant lié à un paramètre x associé ;
- une première mémoire 16 pour stocker la clé secrète s ;
- une seconde mémoire 14 pour stocker les paramètres x ;
- une interface 24 pour échanger des données avec l'application de sécurité externe, de façon connue en soi ;
- un circuit 22 de multiplication entre la clé secrète s et le challenge c ; et
- un additionneur 26 (ou un soustracteur) pour combiner arithmétiquement le résultat de la multiplication et le nombre pseudo-aléatoire issu du générateur 12.

Dans la réalisation illustrée par la figure 7, le circuit de multiplication 22 décale le premier facteur f1, particulièrement la clé secrète s, conformément aux exigences de l'invention, puis transmet séquentiellement bit par bit le résultat obtenu à l'additionneur 26.

Parallèlement, le générateur pseudo-aléatoire 12 transmet séquentiellement bit par bit l'aléa r à l'additionneur 26.

L'additionneur 26 additionne ainsi séquentiellement bit par bit l'aléa r et le résultat fourni par le circuit de multiplication 22.

Les différents moyens inclus dans le dispositif 10 sont réalisés en logique câblée.

Un tel dispositif 10 est monté, tel que décrit à la figure 8, sur un support 28 au format d'une carte de crédit par exemple. Le support 28 peut par exemple être inséré dans un lecteur 30 hébergeant l'application de sécurité 34.

Dans un exemple d'application, l'insertion du support 28 dans le lecteur 30 active automatiquement l'application de sécurité 34 qui sollicite la puce électronique et lui transmet des données, particulièrement le challenge c. La puce électronique s'authentifie en lui fournissant une valeur cryptographique y (ou V) calculée selon le procédé de l'invention. Comme décrit à la figure 1, un paramètre x lié à r est transmis à l'application de sécurité.

A partir des valeurs x et V (ou y), l'application de sécurité procède alors à la vérification.

De façon classique, lorsque le paramètre x est de la forme $x = g^r$, l'équation vérifiée par l'application de sécurité peut être de la forme $g^y = x.p^c$ lorsque la valeur cryptographique est de la forme $y = r + sc$, ou $g^y.p^c = x$ si la valeur cryptographique est de la forme $y = r - sc$.

Dans le cas où le paramètre x fait apparaître une fonction de hachage ($x = h(g^r,D)$), l'équation de vérification est classiquement $h(g^y/p^c,D) = x$ lorsque la valeur cryptographique est de la forme $y = r + sc$. De préférence, on utilise alors une valeur cryptographique de la forme $y = r - sc$, afin que l'équation de vérification ne fasse pas intervenir de divisions : $h(g^y.p^c,D) = x$.

Lorsque la valeur d'authentification est validée, l'authentification de la puce est correcte et l'application de sécurité en informe la puce électronique. Les transactions entre l'application de sécurité et la puce électronique sont ainsi autorisées.

**Revendications**

1. Procédé pour accomplir une opération cryptographique dans un dispositif (10) sous le contrôle d'une application de sécurité (34), dans lequel on produit une valeur cryptographique (y) dans le dispositif, par un calcul comprenant au moins une multiplication entre deux facteurs incluant une partie au moins d'une clé secrète (s) associée au dispositif, **caractérisé en ce que**, un premier des deux facteurs de la multiplication ayant un nombre de bits déterminé L en représentation binaire, on contraint le second des deux facteurs de la multiplication pour qu'il comprenne, en représentation binaire, plusieurs bits à 1 avec, entre chaque paire de bits à 1 consécutifs, une séquence d'au moins L-1 bits à 0, et **en ce que** la multiplication est réalisée en assemblant des versions binaires du premier facteur respectivement décalées conformément aux positions des bits à 1 du second facteur.

2. Procédé selon la revendication 1, dans lequel la clé secrète (s) fait partie d'une paire de clés cryptographiques asymétriques associée au dispositif (10).

3. Procédé selon la revendication 1 ou 2, dans lequel le dispositif (10) comprend une puce incluant une logique câblée pour produire la valeur cryptographique.

4. Procédé selon l'une quelconque des revendications précédentes, dans lequel le calcul de la valeur cryptographique comprend en outre une addition ou une soustraction entre un nombre pseudo-aléatoire (r) et le résultat de la multiplication.

5. Procédé selon la revendication 4, dans lequel les premier et second facteurs (s, c) et le nombre pseudo-aléatoire (r) sont dimensionnés pour que le nombre pseudo-aléatoire soit supérieur au résultat de la multiplication.

6. Procédé selon la revendication 5, dans lequel le nombre de bits à 1 du second facteur est choisi au plus égal au plus grand entier inférieur ou égal à $s_1/L$, où $s_1$ est un seuil prédéfini inférieur au nombre de bits du nombre pseudo-aléatoire (r) en représentation binaire.

7. Procédé selon l'une quelconque des revendications précédentes, dans lequel les deux facteurs de la multiplication incluent, en plus de ladite partie de la clé secrète (s), un nombre (c) fourni au dispositif par l'application de sécurité exécutée en dehors du dispositif.

8. Procédé selon l'une quelconque des revendications 1 à 6, dans lequel les deux facteurs de la multiplication incluent, en plus de ladite clé secrète (s), un nombre (c) fourni par le dispositif.

9. Procédé selon l'une quelconque des revendications précédentes, dans lequel ladite partie de la clé secrète (s) est ledit premier facteur de la multiplication.

10. Procédé selon la revendication 9, dans lequel lesdites versions binaires sont disposées dans des intervalles respectifs de même taille en bits, ladite taille correspondant à la taille totale d'un espace utilisable divisée par le nombre de bits à 1 du second facteur de la multiplication, chaque version binaire étant placée dans son intervalle respectif en fonction d'un décalage conformément aux positions des bits à 1 du second facteur.

11. Procédé selon l'une quelconque des revendications 1 à 8, dans lequel ladite partie de la clé secrète (s) est le second facteur de la multiplication.

12. Procédé selon la revendication 11, dans lequel la clé secrète (s) est stockée dans un support de mémoire du dispositif en codant les positions de ses bits à 1.

13. Procédé selon l'une quelconque des revendications 11 à 12, dans lequel la clé secrète (s) est stockée dans un support de mémoire (16) du dispositif en codant des nombres de bits séparant respectivement des bornes inférieures d'intervalles de (S-1)/(n-1) bits et des bornes inférieures de blocs de bits alloués au premier facteur (c) de la multiplication et disposés chacun dans les intervalles associés, S étant le nombre de bits de la clé secrète et n le nombre de bits à 1 de la clé secrète.

14. Procédé selon l'une quelconque des revendications 11 à 12, dans lequel la clé secrète (s) est stockée dans un support de mémoire (16) du dispositif en codant des nombres de bits, chacun représentatif du nombre de bits séparant deux blocs de bits successifs alloués au premier facteur (c) de la multiplication.

15. Procédé selon l'une quelconque des revendications précédentes, dans lequel la valeur cryptographique (y) est produite pour authentifier le dispositif dans une transaction avec l'application de sécurité exécutée en dehors du dispositif.

16. Procédé selon l'une quelconque des revendications 1 à 14, dans lequel la valeur cryptographique (y) est produite en tant que signature électronique.

17. Dispositif à fonction cryptographique, comprenant des moyens (24) d'interface avec une application de sécurité (34) et des moyens de calcul (12, 22, 26) pour produire une valeur cryptographique (y), les moyens de calcul comprenant des moyens de multiplication (22) entre deux facteurs incluant une partie au moins d'une clé secrète (s) associée au dispositif, **caractérisé en ce que**, un premier des deux facteurs de la multiplication ayant un nombre de bits déterminé L en représentation binaire, et le second des deux facteurs de la multiplication étant contraint pour comprendre, en représentation binaire, plusieurs bits à 1 avec, entre chaque paire de bits à 1 consécutifs, une séquence d'au moins L-1 bits à 0, les moyens de multiplication comprennent des moyens pour assembler des versions binaires du premier facteur respectivement décalées conformément aux positions des bits à 1 du second facteur.

**18.** Dispositif selon la revendication 17, comprenant en outre des moyens (12) de génération d'un nombre pseudo-aléatoire (r), les moyens de calcul comprenant des moyens (26) pour ajouter ou soustraire le résultat de la multiplication audit nombre pseudo-aléatoire.

**19.** Dispositif selon la revendication 18, dans lequel les premier et second facteurs (s, c) et le nombre pseudo-aléatoire (r) sont dimensionnés pour que le nombre pseudo-aléatoire soit supérieur au résultat de la multiplication.

**20.** Dispositif selon l'une quelconque des revendications 17 à 19, dans lequel les moyens (12,22,26) de calcul sont réalisés en logique câblée.

**21.** Dispositif selon l'une quelconque des revendications 17 à 20, dans lequel ladite partie de la clé secrète (s) est le premier facteur de la multiplication.

**22.** Dispositif selon l'une quelconque des revendications 17 à 20, dans lequel ladite partie de la clé secrète (s) est le second facteur de la multiplication.

**23.** Dispositif selon la revendication 22, comprenant en outre une mémoire (16) adaptée pour stocker des données de codage des positions des bits à 1 de la clé secrète (s).

**Claims**

**1.** Method for performing a cryptographic operation in a device (10) under the control of a security application (34), in which a cryptographic value (y) is produced in the device, by a calculation comprising at least one multiplication between two factors including a part at least of a secret key (s) associated with the device, **characterized in that,** a first of the two factors of the multiplication having a determined number of bits L in binary representation, the second of the two factors of the multiplication is constrained so that it comprises, in binary representation, several bits set to 1 with, between each pair of consecutive bits set to 1, a sequence of at least L - 1 bits set to 0, and **in that** the multiplication is achieved by assembling binary versions of the first factor, respectively shifted in accordance with the positions of the bits set to 1 of the second factor.

**2.** Method according to Claim 1, in which the secret key (s) forms part of an asymmetric cryptographic key pair associated with the device (10).

**3.** Method according to Claim 1 or 2, in which the device (10) comprises a chip including hard-wired logic for producing the cryptographic value.

**4.** Method according to any one of the preceding claims, in which the calculation of the cryptographic value furthermore comprises an addition or a subtraction between a pseudo-random number (r) and the result of the multiplication.

**5.** Method according to Claim 4, in which the first and second factors (s, c) and the pseudo-random number (r) are dimensioned so that the pseudo-random number is greater than the result of the multiplication.

**6.** Method according to Claim 5, in which the number of bits set to 1 of the second factor is chosen at most equal to the largest integer less than or equal to $s_1/L$, where $s_1$ is a predefined threshold less than the number of bits of the pseudo-random number (r) in binary representation.

**7.** Method according to any one of the preceding claims, in which the two factors of the multiplication include, as well as said part of the secret key (s), a number (c) provided to the device by the security application executed outside the device.

**8.** Method according to any one of Claims 1 to 6, in which the two factors of the multiplication include, as well as said secret key (s), a number (c) provided by the device.

**9.** Method according to any one of the preceding claims, in which said part of the secret key (s) is said first factor of the multiplication.

**10.** Method according to Claim 9, in which said binary versions are disposed in respective intervals of same size in bits, said size corresponding to the total size of a usable space, divided by the number of bits set to 1 of the second factor of the multiplication, each binary version being placed in its respective interval as a function of a shift in accordance with the positions of the bits set to 1 of the second factor.

11. Method according to any one of Claims 1 to 8, in which said part of the secret key (s) is the second factor of the multiplication.

12. Method according to Claim 11, in which the secret key (s) is stored in a memory support of the device by coding the positions of its bits set to 1.

13. Method according to any one of Claims 11 to 12, in which the secret key (s) is stored in a memory support (16) of the device by coding numbers of bits separating respectively lower bounds of intervals of (S-1)/(n-1) bits and lower bounds of blocks of bits allotted to the first factor (c) of the multiplication and each disposed in the associated intervals, S being the number of bits of the secret key and n the number of bits set to 1 of the secret key.

14. Method according to any one of Claims 11 to 12, in which the secret key (s) is stored in a memory support (16) of the device by coding numbers of bits, each representative of the number of bits separating two blocks of successive bits allotted to the first factor (c) of the multiplication.

15. Method according to any one of the preceding claims, in which the cryptographic value (y) is produced so as to authenticate the device in a transaction with the security application executed outside the device.

16. Method according to any one of Claims 1 to 14, in which the cryptographic value (y) is produced as an electronic signature.

17. Device with cryptographic function, comprising means (24) of interfacing with a security application (34) and means of calculation (12, 22, 26) for producing a cryptographic value (y), the means of calculation comprising means of multiplication (22) between two factors including a part at least of a secret key (s) associated with the device, **characterized in that**, a first of the two factors of the multiplication having a determined number of bits L in binary representation, and the second of the two factors of the multiplication being constrained so that it comprises, in binary representation, several bits set to 1 with, between each pair of consecutive bits set to 1, a sequence of at least L - 1 bits set to 0, the multiplication means comprise means for assembling binary versions of the first factor, respectively shifted in accordance with the positions of the bits set to 1 of the second factor.

18. Device according to Claim 17, furthermore comprising means (12) of generating a pseudo-random number (r), the means of calculation comprising means (26) for adding the result of the multiplication to or subtracting it from said pseudo-random number.

19. Device according to Claim 18, in which the first and second factors (s, c) and the pseudo-random number (r) are dimensioned so that the pseudo-random number is greater than the result of the multiplication.

20. Device according to any one of Claims 17 to 19, in which the means (12, 22, 26) of calculation are embodied as hard-wired logic.

21. Device according to any one of Claims 17 to 20, in which said part of the secret key (s) is the first factor of the multiplication.

22. Device according to any one of Claims 17 to 20, in which said part of the secret key (s) is the second factor of the multiplication.

23. Device according to Claim 22, furthermore comprising a memory (16) adapted for storing data for coding the positions of the bits set to 1 of the secret key (s).

**Patentansprüche**

1. Verfahren zur Durchführung einer kryptographischen Operation in einer Vorrichtung (10) unter der Kontrolle einer Sicherheitsanwendung (34), bei dem ein kryptographischer Wert (y) in der Vorrichtung durch eine Berechnung erzeugt wird, die mindestens die Multiplikation zwischen zwei Faktoren aufweist, die mindestens einen Teil eines der Vorrichtung zugeordneten geheimen Schlüssels (s) umfassen, **dadurch gekennzeichnet, dass,** wenn ein erster der zwei Faktoren der Multiplikation eine bestimmte Anzahl von Bits L in binärer Darstellung hat, der zweite der zwei Faktoren der Multiplikation eingeschränkt wird, damit er in binärer Darstellung mehrere Bits mit dem Wert 1 aufweist, mit zwischen jedem Paar von aufeinanderfolgenden Bits mit dem Wert 1 einer Folge von mindestens L-1 Bits mit dem Wert 0, und dass die Multiplikation durchgeführt wird, indem binäre Versionen des ersten Faktors zusammengefügt werden, die je gemäß den Positionen der Bits mit dem Wert 1 des zweiten Faktors versetzt sind.

2. Verfahren nach Anspruch 1, bei dem der geheime Schlüssel (s) Teil eines Paars von asymmetrischen kryptographischen Schlüsseln ist, die der Vorrichtung (10) zugeordnet sind.

3. Verfahren nach Anspruch 1 oder 2, bei dem die Vorrichtung (10) einen Chip aufweist, der eine verkabelte Logik umfasst, um den kryptographischen Wert zu erzeugen.

4. Verfahren nach einem der vorhergehenden Ansprüche, bei dem die Berechnung des kryptographischen Werts außerdem eine Addition oder eine Subtraktion zwischen einer Pseudozufallszahl (r) und dem Ergebnis der Multiplikation aufweist.

5. Verfahren nach Anspruch 4, bei dem der erste und der zweite Faktor (s, c) und die Pseudozufallszahl (r) so bemessen sind, dass die Pseudozufallszahl größer ist als das Ergebnis der Multiplikation.

6. Verfahren nach Anspruch 5, bei dem die Anzahl von Bits mit dem Wert 1 des zweiten Faktors höchstens gleich der größten ganzen Zahl kleiner als oder gleich $s_1/L$ gewählt wird, wobei $s_1$ eine vorbestimmte Schwelle kleiner als die Anzahl von Bits der Pseudozufallszahl (r) in binärer Darstellung ist.

7. Verfahren nach einem der vorhergehenden Ansprüche, bei dem die zwei Faktoren der Multiplikation zusätzlich zu dem Teil des geheimen Schlüssels (s) eine Zahl (c) umfassen, die der Vorrichtung von der Sicherheitsanwendung geliefert wird, die außerhalb der Vorrichtung ausgeführt wird.

8. Verfahren nach einem der Ansprüche 1 bis 6, bei dem die zwei Faktoren der Multiplikation zusätzlich zu dem geheimen Schlüssel (s) eine von der Vorrichtung gelieferte Zahl (c) umfassen.

9. Verfahren nach einem der vorhergehenden Ansprüche, bei dem der Teil des geheimen Schlüssels (s) der erste Faktor der Multiplikation ist.

10. Verfahren nach Anspruch 9, bei dem die binären Versionen in jeweiligen Zwischenräumen gleicher Größe in Bits angeordnet sind, wobei die Größe der Gesamtgröße eines nutzbaren Raums geteilt durch die Anzahl von Bits mit dem Wert 1 des zweiten Faktors der Multiplikation entspricht, wobei jede binäre Version in ihrem jeweiligen Zwischenraum in Abhängigkeit von einer Versetzung entsprechend den Positionen der Bits mit dem Wert 1 des zweiten Faktors angeordnet ist.

11. Verfahren nach einem der Ansprüche 1 bis 8, bei dem der Teil des geheimen Schlüssels (s) der zweite Faktor der Multiplikation ist.

12. Verfahren nach Anspruch 11, bei dem der geheime Schlüssel (s) in einem Speicherträger der Vorrichtung gespeichert wird, indem die Positionen seiner Bits mit dem Wert 1 codiert werden.

13. Verfahren nach einem der Ansprüche 11 bis 12, bei dem der geheime Schlüssel (s) in einem Speicherträger (16) der Vorrichtung gespeichert wird, indem Anzahlen von Bits codiert werden, die untere Grenzen von Zwischenräumen von (S-1)/(n-1) Bits bzw. untere Grenzen von Blöcken von Bits trennen, die dem ersten Faktor (c) der Multiplikation zugewiesen und jeder in den zugeordneten Zwischenräumen angeordnet sind, wobei S die Anzahl von Bits des geheimen Schlüssels und n die Anzahl von Bits mit dem Wert 1 des geheimen Schlüssels ist.

14. Verfahren nach einem der Ansprüche 11 bis 12, bei dem der geheime Schlüssel (s) in einem Speicherträger (16) der Vorrichtung gespeichert wird, indem Anzahlen von Bits codiert werden, die je für die Anzahl von Bits repräsentativ sind, die zwei aufeinanderfolgende Blöcke von Bits trennen, die dem ersten Faktor (c) der Multiplikation zugewiesen sind.

**15.** Verfahren nach einem der vorhergehenden Ansprüche, bei dem der kryptographische Wert (y) erzeugt wird, um die Vorrichtung in einer Transaktion mit der Sicherheitsanwendung zu authentifizieren, die außerhalb der Vorrichtung ausgeführt wird.

**16.** Verfahren nach einem der Ansprüche 1 bis 14, bei dem der kryptographische Wert (y) als elektronische Signatur erzeugt wird.

**17.** Vorrichtung mit kryptographischer Funktion, die Schnittstellenmittel (24) mit einer Sicherheitsanwendung (34) und Rechenmittel (12, 22, 26) aufweist, um einen kryptographischen Wert (y) zu erzeugen, wobei die Rechenmittel Multiplikationsmittel (22) zwischen zwei Faktoren aufweisen, die mindestens einen Teil eines der Vorrichtung zugeordneten geheimen Schlüssels (s) aufweisen, **dadurch gekennzeichnet, dass**, wenn ein erster der zwei Faktoren der Multiplikation eine bestimmte Anzahl L von Bits in binärer Darstellung hat und der zweite der zwei Faktoren der Multiplikation eingeschränkt wird, um in binärer Darstellung mehrere Bits mit dem Wert 1 aufzuweisen, mit zwischen jedem aufeinanderfolgenden Paar von Bits mit dem Wert 1 einer Folge von mindestens L-1 Bits mit dem Wert 0, die Multiplikationsmittel Mittel aufweisen, um binäre Versionen des ersten Faktors zusammenzufügen, die je entsprechend den Positionen der Bits mit dem Wert 1 des zweiten Faktors versetzt sind.

**18.** Vorrichtung nach Anspruch 17, die außerdem Mittel (12) zur Erzeugung einer Pseudozufallszahl (r) aufweist, wobei die Rechenmittel Mittel (26) aufweisen, um das Ergebnis der Multiplikation zu der Pseudozufallszahl hinzuzufügen oder davon abzuziehen.

**19.** Vorrichtung nach Anspruch 18, bei der der erste und der zweite Faktor (s, c) und die Pseudozufallszahl (r) so bemessen sind, dass die Pseudozufallszahl größer ist als das Ergebnis der Multiplikation.

**20.** Vorrichtung nach einem der Ansprüche 17 bis 19, bei der die Rechenmittel (12, 22, 26) in verkabelter Logik hergestellt werden.

**21.** Vorrichtung nach einem der Ansprüche 17 bis 20, bei der der Teil des geheimen Schlüssels (s) der erste Faktor der Multiplikation ist.

**22.** Vorrichtung nach einem der Ansprüche 17 bis 20, bei der der Teil des geheimen Schlüssels (s) der zweite Faktor der Multiplikation ist.

**23.** Vorrichtung nach Anspruch 22, die weiter einen Speicher (16) aufweist, der geeignet ist, um Codierdaten der Positionen der Bits mit dem Wert 1 des geheimen Schlüssels (s) zu speichern.

**FIG. 1**

DÉBUT

GÉNÉRATION DE r  (1)

TRANSMISSION DE x  (2)

CALCUL VALEUR CRYPTOGRA. Y  (3)

TRANSMISSION DE V  (4)

VÉRIFICATION DE V  (5)

FIN

## FIG. 2

aléa r

$s_1+L$  $s_1$

EU (B1)

valeur ajoutée
ou soustraite

$b_{[5]}$  $b_{[4]}$  $b_{[3]}$  $b_{[2]}$  $b_{[1]}$  (B2)

$i[5]$

$i[4]$

$i[3]$

$i[2]$

$i[1]$

## FIG. 3

aléa r

$s_1+L$  $s_1$

EU (B3)

$I[5]$  $I[4]$  $I[3]$  $I[2]$  $I[1]$

valeur ajoutée
ou soustraite

$b_{[5]}$  $b_{[4]}$  $b_{[3]}$  $b_{[2]}$  $b_{[1]}$  (B4)

$j[5]$  $j[4]$  $j[3]$  $j[2]$  $j[1]$

## FIG. 4

aléa r

$s_1+L$  $s_1$

EU (B5)

valeur ajoutée
ou soustraite

$b_{[5]}$  $b_{[4]}$  $b_{[3]}$  $b_{[2]}$  $b_{[1]}$  (B6)

$j[5]$  $j[4]$  $j[3]$  $j[2]$  $j[1]$

15

# FIG. 5

secret de
taille S

(B7)

$$I[5] \quad I[4] \quad I[3] \quad I[2] \quad I[1]$$

P[5]  P[4]  P[3]  P[2]  P[1]

$$S \qquad 4S/5 \qquad 3S/5 \qquad 2S/5 \qquad S/5$$

# FIG. 6

secret de
taille S

(B8)

P[6]  P[5]  P[4]  P[3]  P[2]  P[1]

**FIG. 7**

**FIG. 8**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2826531 A